(19) Europäisches Patentamt / European Patent Office / Office européen des brevets

(11) **EP 3 195 736 A1**

(12) ## EUROPEAN PATENT APPLICATION
published in accordance with Art. 153(4) EPC

(43) Date of publication:
**26.07.2017 Bulletin 2017/30**

(21) Application number: **15841365.8**

(22) Date of filing: **17.09.2015**

(51) Int Cl.:
*A23L 27/00* (2016.01)      *A23C 9/13* (2006.01)
*A23C 9/152* (2006.01)      *A23G 3/34* (2006.01)
*A23G 9/32* (2006.01)      *A23G 9/44* (2006.01)
*A23G 9/52* (2006.01)      *A23L 2/00* (2006.01)
*C09K 15/08* (2006.01)      *C11B 9/00* (2006.01)

(86) International application number:
**PCT/JP2015/076514**

(87) International publication number:
**WO 2016/043276 (24.03.2016 Gazette 2016/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.09.2014  JP 2014188405**

(71) Applicant: **Takasago International Corporation
Tokyo-to 144-8721 (JP)**

(72) Inventors:
 • **OHMIYA Tadamasa**
  **Hiratsuka-shi**
  **Kanagawa 254-0073 (JP)**
 • **HIRAMOTO Tadahiro**
  **Hiratsuka-shi**
  **Kanagawa 254-0073 (JP)**

(74) Representative: **Takeuchi, Maya et al
Fédit-Loriot
38, avenue Hoche
75008 Paris (FR)**

(54) **FLAVOR DETERIORATION INHIBITOR**

(57)      The present invention provides a flavor deterioration inhibitor capable of significantly suppressing the deterioration of taste due to causes such as light and/or heat. The present invention is directed to a flavor deterioration inhibitor comprising an apple extract for cider or having an apple extract for cider as an active ingredient.

EP 3 195 736 A1

**Description**

Technical Field

The present invention relates to a flavor deterioration inhibitor, which has been derived from a specific natural product and which can be widely applied to food, drink and a flavor, containing flavor components; a method for producing the same; a flavor, food and drink, containing the flavor deterioration inhibitor; and a method for inhibiting flavor deterioration.

Background Art

Various products such as food, drink and oral sanitary agents have unique aroma, flavor and taste due to the flavor originally possessed by a material or the flavor generated during a production process. Particularly, in food or drink, the flavor is one factor of deliciousness and also plays an important role of inducing an appetite.

However, it is widely known that those flavor components are relatively unstable, and therefore the flavor is gradually deteriorated by the influence of light, heat, oxygen, etc. during the production, distribution or storage step of goods, or during display thereof.

Particularly, in the field of food or drink, the deterioration phenomenon of flavor due to heat or light or the deterioration phenomenon of flavor caused during the storage or display of goods becomes a problem with the spread of a heated beverage by a hot vender or the spread of a beverage in a transparent container such as PET bottle in recent years, and a flavor deterioration inhibitor or inhibition method against the deterioration phenomenon has been demanded.

It is generally known that in food or drink having citrus flavor, the flavor is particularly easy to be deteriorated by the influence of light, heat, oxygen, etc. There is a case that fresh flavor inherent in the original citrus flavor is deteriorated, leading to the disappearance of freshly made flavor and the generation of unpleasant flavor. It is considered that one of the causes of flavor deterioration is that, among citrus flavor components, citral known as a key component of such as lemon flavor causes a cyclization reaction by light or heat and changes into a substance such as photocitral.

Similarly, it is known that in food or drink containing milk, the flavor is particularly easy to be deteriorated by the influence of light, heat, oxygen, etc. It is said that as one of the causes, there is a case that reactive oxygen is formed by a photosensitizer reaction by light, in which riboflavin in milk participates, butterfat and protein are oxidized by the reactive oxygen, and flavor components having low threshold are formed, leading to a remarkable decrease in commercial value.

Especially, in the field of food or drink, sales racks are set to be very bright in order to attractively appeal goods to consumers and in order to create cleanliness. Furthermore, food or drink sealed in a light-transmitting container such as a PET bottle, a plastic container or a transparent bag in recent years is widespread in order that consumers confirm the contents of goods, thereby enabling the confirmation of the commercial value, giving a feeling of security or promoting the judgment in purchasing goods.

Furthermore, sales pattern in which goods are displayed under a fluorescent lamp for a long period of time in convenience stores and the like became popular by the environmental change of sales pattern. Therefore, the development of a method that can significantly inhibit the deterioration phenomenon of flavor by light or heat or the deterioration phenomenon of flavor by the irradiation with a fluorescent lamp caused during the display of goods is demanded in early stages.

Under the background, various methods are conventionally proposed as a method for inhibiting flavor deterioration. For example, the addition of various antioxidants such as ascorbic acid or light deterioration inhibitors is proposed (Non-Patent Document 1). Furthermore, it is proposed that $\alpha$-glucosylrutin has the effect of inhibiting flavor deterioration (see Patent Document 1), the deterioration is inhibited by containing coumarin derivatives (see Patent Document 2), or an extract of tea is additionally used and blended with an emulsion containing tocopherol and ferulic acid (Patent Document 3).

On the other hand, apple is classified into family Rosaceae, genus Malus. Genus Malus is said to have 20 or more species in Europe and Asia, and about 10 species in America. Malus sieboldii, Malus baccata var. mandshurica, Malus spontanea, or the like is naturally distributed in Japan, but the one cultivated for eating is all Malus domestica (Non-Patent Document 2).

The apple cultivated for eating includes ones for eating raw and for processing. Varieties such as Fuji apple, Tsugaru apple and Jonagold apple are cultivated for eating raw, and varieties for cider or for calvados, which are raw materials of alcoholic beverages are cultivated for processing (Non-Patent Document 3).

Some literatures describe that an extract of apple contains caffeic acid derivatives, p-coumaric acid derivatives, flavan-3-ols, flavonols, and dihydrocalcons, and antioxidant effect thereof is reported (Patent Document 4). However, there is no report relating to the flavor deterioration inhibition.

Prior Art Documents

Patent Document

Patent Document 1: JP-A-03-27293
Patent Document 2: JP-A-2001-136931
Patent Document 3: JP-A-2004-166631
Patent Document 4: JP-A-07-285876

Non-Patent Document

Non-Patent Document 1: Patent Office Publication, Published Collection of Well-Known Prior Arts (Flavor and Fragrance), Part 1, p.p. 141 to 147
Non-Patent Document 2: HASEGAWA LETTER (Hasegawa Co., Ltd. Technical Report) p.22, 1999
Non-Patent Document 3: All About Apple, Shingo Nakamura, Association for Promotion of AppleFare, 1994, SSK Research Institute, Publishing Department

Summary of the Invention

Problems that the Invention is to Solve

However, the flavor deterioration inhibitor derived from a natural product in the prior arts exhibits the flavor deterioration inhibition effect to some extent regarding, but it is necessary to use a large amount thereof to some extent in order to exhibit the flavor deterioration inhibition effect. As a result, it is lacking in the practical use such that taste and smell possessed by the flavor deterioration inhibitor itself adversely affect taste and aroma of the food or drink itself, and the inhibitor does not yet exhibit the satisfactory effect.

An object of the present invention is to provide a flavor deterioration inhibitor that can significantly inhibit the flavor deterioration phenomenon due to factors such as light or heat. Specifically, the present invention is to provide a flavor deterioration inhibitor that has high safety and can be preferably used in food or drink. Furthermore, the present invention has an object to provide a flavor deterioration inhibitor that effectively acts to the flavor deterioration phenomenon caused by receiving the influence of the above factors, particularly light.

Means for Solving the Problems

As a result of intensive investigations of flavor deterioration inhibition activity on components derived from a great variety of natural products centering plants in order to solve the above problems, the present inventors have found that flavor deterioration of foods by particularly light and in addition by heat, oxygen and the like can be inhibited over a long period of time by using an extract of cider apple.

They have further confirmed that the excellent flavor deterioration inhibition effect does not depend on each of various polyphenols contained in the cider apple, but is the inherent effect originated from the combination of those and other trace components contained. The present invention has been completed based on the finding.

The present invention relates to the following [1] to [12].

[1] A flavor deterioration inhibitor composed of an extract of a cider apple, or containing an extract of a cider apple as an effective component.

[2] The flavor deterioration inhibitor according to [1], in which the extract of the cider apple is an adsorbent-treated product of an extraction liquid of the cider apple.

[3] The flavor deterioration inhibitor according to [2], in which the adsorbent is a synthetic resin adsorbent.

[4] The flavor deterioration inhibitor according to any one of [1] to [3], in which the cider apple is a fruit, a dry fruit, a fruit juice, a squeezed liquid, or a residue after squeezing a liquid.

[5] The flavor deterioration inhibitor according to any one of [1] to [4], in which the cider apple has, in a squeezed liquid thereof, a total polyphenol content of 0.2 mass % or more, and a malic acidity of 0.45 mass % or less.

[6] The flavor deterioration inhibitor according to any one of [1] to [5], in which the extract of the cider apple has a phloretin content in a total polyphenol of 8 mass % or more.

[7] The flavor deterioration inhibitor according to any one of [1] to [6], in which the extract of the cider apple has a procyanidins content in a total polyphenol of 25 mass % or less.

[8] A flavor containing the flavor deterioration inhibitor according to any one of [1] to [7].

[9] A food or drink containing the flavor deterioration inhibitor according to any one of [1] to [7].

[10] A method for inhibiting flavor deterioration of a material to be tested, including adding the flavor deterioration inhibitor according to any one of [1] to [7] to the material to be tested, a flavor of which may be deteriorated.

[11] A method for producing a flavor deterioration inhibitor, including a step of subjecting an extraction liquid of a cider apple to an adsorption and desorption treatment with a synthetic resin adsorbent.

[12] A method for producing a flavor deterioration inhibitor, including the following steps (a) to (c):

(a) a step of bringing a cider apple into contact with water or a polar organic solvent to obtain an extraction liquid of the cider apple;
(b) a step of bringing the extraction liquid of the cider apple obtained in the step (a) into contact with an adsorbent, and then eluting a component adsorbed in the adsorbent with an organic solvent aqueous solution to obtain an adsorbent-treated product; and
(c) a step of concentrating the adsorbent-treated product obtained in the step (b).

Advantageous Effects of the Invention

By containing the flavor deterioration inhibitor of the present invention in food or drink, polyphenol such as quercetin, caffeic acid, chlorogenic acid, phloretin, and catechin, contained in an extract of cider apple is synergistically acted with other trace components, thereby effectively inhibiting flavor deterioration phenomenon. Especially, flavor deterioration progress that gradually proceeds in each stage of production, distribution, storage, and during the period of display is efficiently inhibited in citral or citrus food or drink such as a product containing citral, and food or drink containing milk, thereby maintaining fresh feeling that a product originally possesses. As a result, quality of a product can be maintained inexpensively and stably over a long period of term.

Brief Description of the Drawings

[FIG. 1] FIG. 1 shows the comparison of HPLC profile between the extract of cider apple of Example 1 and the extract of apple for dessert of Comparative Example 1.
[FIG. 2] FIG. 2 is a graph showing the comparison of polyphenol composition between the extract of cider apple of Example 1 and the extract of apple for dessert of Comparative Example 1.
[FIG. 3] FIG. 3 shows the comparison of total polyphenol and procyanidins between the extract of cider apple of Example 1 and the extract of apple for dessert of Comparative Example 1.
[FIG. 4] FIG. 4 is a graph comparing citral residual ratio by adding various extracts.
[FIG. 5] FIG. 5 is a graph comparing citral residual ratio (%) by adding the extract of cider apple of Example 1 and each polyphenol.

Mode for Carrying Out the Invention

The present invention is described in further detail below.

In the present description, "mass %", "mass ppm" and "parts by mass" are synonymous to "weight %", "weight ppm" and "parts by weight", respectively.

(1) Raw material

Example of the raw material used in the present invention includes cider apple, and bittersweet type cider apple is particularly preferred. The cider apple means the one in which, in a squeezed liquid thereof, the total polyphenol content is 0.2 mass % or more and the amino nitrogen content is 8 mg·% or more.

Parts used of the cider apple are preferably parts containing a flesh and/or peel (fruits), a fruit juice, a squeezed liquid, or a residue of a squeezed liquid. The flesh and/or peel may be a dried product (dry fruit), and the fruit juice and squeezed liquid may be a concentrate.

Examples of the variety of the cider apple include Ashuton Brown Jersey Brown Apple, Brown Snout, Bulmer's Norman, Chisel Jersey, Coat Royal, Dabinett, Fill Barrel, Harry Masters Jersey, Kingstone Black, Medalled' Or, Michelin, Nehou, Northwood, Prosters Perfection, Stoke Red, Sweet Copin, Tremblett's Bitter, Vilberie, White Norman, Yarlington Mill, Breakwells Seedling, Rab, Sandford Jersey, Crimson King, Binet Rouge, Bramtot, Cartigny, Dou Veret de Carrouges, Meriennet, Bedan, Binet Violet, Bisquet, Cineteiere de Blangy, Egiptia, Feuillard, Gagnevin, Germaine, Groin D'ane, Gros Bois, Jaune de Vitre, Moulin a Vent du Calvados, Noel des Champs, Petite sorte du Parc Dufour, Rene-Martin, Rouge Duret, Rouge de Treves, Saint-Martin, Saint-Philbert ou Joly, Solage a Gouet, Juliana, Juliana, Clozette, Avrolles, Dous Moen, Antoinette, Douce Coet Ligne, Chevalier Jaune, Kermerrien, and Jeanne Renard.

The bittersweet type cider apple means the one in which, in a squeezed liquid thereof, the total polyphenol content is 0.2% or more, the amino nitrogen content is 8 mg·% or more, and the malic acidity is 0.45 mass % or less.

(2) Production method of extract of cider apple

(a) Squeezing method

The squeezing method is not particularly limited, but, for example, the following method can be exemplified. A raw material is cleaned, and is crushed and compressed directly or while adding sulfurous acid, thereby obtaining a squeezed fruit juice, and preferably, pectic enzyme is added and acted. Subsequently, a clarified fruit juice is obtained by the means such as centrifugal separation or filtration.

(b) Extraction method

The extraction method is not particularly limited, but, for example, the following method can be exemplified. A raw material such as fruit, dry fruit, a fruit juice, a squeezed liquid, or a residue after squeezing is brought into contact with a solvent for a certain period of time, followed by heating, stirring or refluxing as necessary. The extraction liquid obtained is subjected to centrifugal separation and filtration to obtain a clarified extraction liquid of cider apple.

The extraction may be conducted under any of heating, room temperature or cooling conditions. The extraction temperature can be optionally determined, and is not particularly limited. However, the temperature is preferably 0°C or higher and 100°C or lower, and more preferably 30°C or higher and 70°C or lower. The extraction time is preferably 1 hour or longer and 72 hours or shorter, and more preferably 2 hours or longer and 7 hours or shorter.

The solvent used in the extraction treatment is water or a polar organic solvent, and the organic solvent may be a water-containing material. Examples of the polar organic solvent include alcohol and acetone. Above all, water or an aliphatic alcohol having a carbon number of 2 or more and 4 or less such as ethanol, propanol or butanol is preferred from the standpoints of safety to a human body and handling properties. The amount of the solvent used in the extraction can be optionally selected, but the amount of the solvent is generally 0.5 parts by weight or more and 100 parts by weight or less, per 1 part by weight of the raw material.

Superfluous lipid may be prevented from being extracted in the subsequent extraction treatment by previously performing degreasing or a cleaning treatment with an organic solvent such as hexane, ethyl acetate or ether as a pre-treatment of the extraction, and deodorization refining operation of flavor or aroma inherent in a material may be conducted by applying a treatment such as steam distillation.

An extraction liquid of cider apple is then obtained by removing solids insoluble in the solvent. As a method for removing solids, various solid-liquid separation means such as centrifugal separation, filtration or squeezing can be used.

The extraction liquid of cider apple obtained can be directly used in a flavor deterioration inhibitor as an extract of cider apple, but may be used, for example, by appropriately diluting with a liquid such as water, ethanol, glycerin, or propylene glycol. Furthermore, an excipient such as dextrin can be added. Those may be further concentrated and can be used as a pasty extract.

Furthermore, the extraction liquid of cider apple may be dried and can be used as a powder in a flavor deterioration inhibitor. The powdering method is not particularly limited, and examples thereof include methods such as hot air drying, freeze drying, spray drying, drum drying, foam drying, and fluidized bed drying.

One obtained by extraction with supercritical extraction, fraction or deodorization treatment can be used as the extraction liquid of cider apple.

(c) Adsorbent treatment

It is preferred that the extraction liquid of cider apple obtained by the above method is treated with an adsorbent to obtain an adsorbent-treated material. The extraction liquid of cider apple is brought into contact with an adsorbent to adsorb an effective component such as phloretin, catechin, quercetin, caffeic acid, or chlorogenic acid on the adsorbent, and the effective component is then eluted with a dissolution medium to obtain an adsorbent-treated material.

Examples of the adsorbent include activated carbon, activated clay and a resin adsorbent. Of those, a resin adsorbent is preferred. Examples of the resin adsorbent include a synthetic resin adsorbent, silica gel, an ion-change resin, and a chelate resin. Particularly, a synthetic resin adsorbent is preferred from the standpoint of easy handling.

Examples of the synthetic resin adsorbent include adsorbents containing an aromatic resin, an acrylic resin, an acrylonitrile resin, or the like. Those synthetic resin adsorbents are commercially available, and examples thereof include DIAION HP20 and HP21, SEPABEADS SP70 (those are an aromatic resin, manufactured by Mitsubishi Chemical Corporation) ("DIAION" and "SEPABEADS" are registered trademark; hereinafter the same); SEPABEADS SP825, SP850 and SP700 (those are an aromatic high surface area type resin, manufactured by Mitsubishi Chemical Corporation); SEPABEADS SP207 (aromatic modified resin, manufactured by Mitsubishi Chemical Corporation); DIAION HP20SS, SEPABEADS SP20SS and SP207SS (those are an aromatic small particle size type resin, manufactured by Mitsubishi Chemical Corporation); AMBERLITE XAD2, XAD4, XAD18, FPX66, XAD1180, XAD1180N, XAD1600N and XAD2000 (styrenic resin), XAD7HP (acrylic resin), and XAD761 (phenolic resin) ("AMBERLITE" manufactured by Organo Corporation is a registered trademark, hereinafter the same); DIAION HP2MG (acrylic resin, manufactured by Mitsubishi Chemical Corporation); AMBERLITE XAD7HP (acrylic resin, manufactured by Organo Corporation); and SEPHADEX LH20 (a derivative of crosslinked dextran, "SEPHADEX" manufactured by GE Healthcare Bioscience is a registered trademark).

The adsorbent may be previously pre-treated prior to the adsorbent treatment. For example, in the case of using a synthetic resin adsorbent as the adsorbent, the pre-treatment can be conducted by cleaning the adsorbent with a solvent such as ethanol to remove impurities, and then further cleaning with water to remove the solvent such as ethanol.

The treatment with the adsorbent may be conducted by any of a batch method and a column method. The column method that can efficiently treat by a relatively small amount of the adsorbent is preferred. The treatment with the adsorbent may be conducted at least one time. The ratio between the adsorbent and the extraction liquid can be selected depending on the kind of the adsorbent used, and the like.

After the treatment with the adsorbent, it is preferred that the adsorbent is cleaned with a cleaning liquid in order to remove non-adsorbing components and the like, as necessary. It is preferred that the cleaning liquid is a solvent that elutes a non-adsorbing component, and inhibits elution of an effective component such as phloretin, catechin, quercetin, caffeic acid, or chlorogenic acid. Examples of the preferred cleaning liquid include water, methanol and ethyl acetate.

The amount of the cleaning liquid used can be appropriately selected depending on the composition of the cleaning liquid, and the like. The cleaning may be conducted multiple times by the same or different cleaning liquids.

The components adsorbed on the adsorbent are eluted by a dissolution medium. An organic solvent aqueous solution is preferred as the dissolution medium, and an aqueous solution of the monohydric lower alcohol is more preferred. Above all, a monohydric alcohol having a carbon number of 1 or more and 4 or less is preferred, and a monohydric alcohol having a carbon number of 1 or more and 3 or less (for example, ethanol) is particularly preferred. The amount of the dissolution medium used can be appropriately selected depending on the composition of a solvent, and the like. The elution may be conducted by stepwisely or continuously changing the concentration of the alcohol.

The concentration of the alcohol in the dissolution medium is preferably from 10 to 99 vol%, and more preferably from 95 to 99 vol%.

(d) Concentration

The extract of cider apple (including the adsorbent-treated material) obtained by the above method can be concentrated and used. The concentration method may be conducted by a conventional method. Examples of the concentration method include a method of recovering a solvent by using an evaporator, and a method of concentrating by using an eluent in a small amount to the amount of the solution loaded during a synthetic adsorbing resin treatment.

As the composition of polyphenol contained in the extract of cider apple (including the adsorbent-treated material) obtained by the above method, condensation type tannins are contained as a polymeric polyphenol compound, and catechin, chlorogenic acid, caffeic acid, quercetin, and phloretin are contained as a simple polyphenol compound.

The phloretin content in the total polyphenol in the extract of cider apple (including the adsorbent-treated material) is preferably 8 mass % or more, more preferably 10 mass % or more, and still more preferably 12 mass % or more. The upper limit is not particularly limited, but is generally 25 mass % or less, and preferably 20 mass % or less. When the phloretin content in the total polyphenol is 8 mass % or more, the effect of flavor deterioration inhibition can be exhibited in food or drink.

The content of procyanidins in the total polyphenol in the extract of cider apple (including the adsorbent-treated material) is preferably 25 mass % or less, more preferably 20 mass % or less, and still more preferably 15 mass % or less. The lower limit is generally 5 mass % or more, and preferably 10 mass % or more. When the content of procyanidins in the total polyphenol is 25 mass % or less, the flavor of the flavor deterioration inhibitor does not affect the flavor of food or drink, and the original good flavor of food or drink can be maintained.

(3) Preparation of flavor deterioration inhibitor

The flavor deterioration inhibitor of the present invention contains the above-described extract of cider apple (regardless of an extract treated with an adsorbent, a concentrate and a dried solid material), and may contain a diluent, a carrier and other additives as components other than the resin-treated material.

The diluent or carrier is not particularly limited so long as it does not disturb the effect of the present invention, and examples thereof include saccharides such as sucrose, glucose, dextrin, starches, cyclodextrin, trehalose, lactose, maltose, palatinose, xylose, starch syrup, and liquid sugar, alcohols such as ethanol, propylene glycol, and glycerin, reduced starch syrup, reduced malt sugar starch syrup, sugar alcohol such as sorbitol, lactitol, palatinit, mannitol, xylitol, erythritol, and maltitol, polysaccharides such as gum Arabic, xanthan gum, carrageenan, guar gum, and gellan gum, and water.

Examples of the additives include an assistant such as an antioxidant or a chelating agent, a flavor, an extract of spice, an extract of edible plant, an extract of fruit, a low-boiling point fraction of cold press oil, and an antiseptic.

The other additives may be used together, such as conventional antioxidants (for example, BHT, BHA, $\alpha$-tocopherol, and vitamin C), preservatives (for example, sorbic acid, benzoic acid, and an extract of soft roe protein), or shelf life improvers (for example, sodium acetate, glycine, glycerin fatty acid ester, lysozyme, and chitosan).

From the convenience on use, in the case of preparing a flavor deterioration inhibitor by using those diluents, carriers or additives, it is preferred to adjust such that the extract of cider apple (including the adsorbent-treated material) is contained in the proportion of preferably 1 ppm or more and 50 mass % or less in terms of solids in 100 mass % of the flavor deterioration inhibitor.

In the case that the intended product is food or drink, it is preferred to adjust such that the extract of cider apple (including the adsorbent-treated material) is contained in the proportion of preferably 1 ppb or more and 5000 ppm or less in terms of solids in 100 mass % of the food or drink.

The food or drink to which the flavor deterioration inhibitor of the present invention can be added are not particularly limited, but the flavor deterioration inhibitor of the present invention is particularly effective to the inhibition of deterioration of citrus flavor or the flavor of milk.

Examples of the food or drink having citrus flavor include drinks such as carbonated drinks, fruit juice drinks, sports drinks, alcoholic drinks, tea/coffee type drinks, soybean drinks, functional drinks, and soups; confectionaries such as chilled sweets, candy desserts, chewing gums, and baked sweets; and seasonings such as fermented soybean paste, soy sauce, sauce, tare (sauce), and dressing.

Example of the food or drink containing milk include drinks such as tea/coffee type drinks, cocoa drinks, fermented milk, and milk-containing acidic drinks; the above-described confectionaries, chilled sweets such as yoghurt, jelly, mousse, ice cream, sherbet, pudding, and cream; and butter, margarine, cheese, and diary/oil and fat products containing those.

Examples

The present invention is described in detail below by Examples and the like, but the present invention is not construed as being limited to those Examples and the like. In the Examples, mass % is also described as "%", and mass ppm is also described as "ppm".

(Example 1)

600 g of cider apple (Dabinett) was cut into small cubes and 600 g of distilled water was added thereto, followed by crushing by using a food processor to obtain a paste. 0.24 g of pectinase was added to the paste, and extraction was conducted under stirring at 50°C for 4 hours. It was cooled to 25°C, and centrifugal separation was conducted under the condition of 4000 rpm and 30 minutes, and a supernatant was recovered. 3 g of celite was added to the supernatant, and filtration was conducted. Thus, 1047 ml of a clear crude extract of cider apple was obtained.

50 ml of AMBERLITE FPX-66 (manufactured by Organo Corporation) was filled in a column, and 350 ml of distilled water, 250 ml of ethanol and 250 ml of distilled water were made to pass through in this order to conduct conditioning operation of the column. 100 ml of the crude extract of apple obtained above was loaded on the column, cleaning with 100 ml of distilled water was performed and elution with 100 ml of 95% ethanol was then performed. Thus, an extract of cider apple was obtained.

The extract of cider apple obtained was concentrated under reduced pressure by an evaporator, and dried. Thus, 1.5 g of a cider apple powder preparation was obtained.

(Comparative Example 1)

The same operation as in Example 1 was conducted using 600 g of apple for eating raw (also called "apple for dessert") (Fuji), and 1055 ml of a crude extract of apple for eating raw was obtained. Subsequently, 100 ml of the crude extract of apple for eating raw was similarly subjected to the purification operation by a resin as in Example 1, and 1.4 g of a powder preparation of apple for eating raw was obtained.

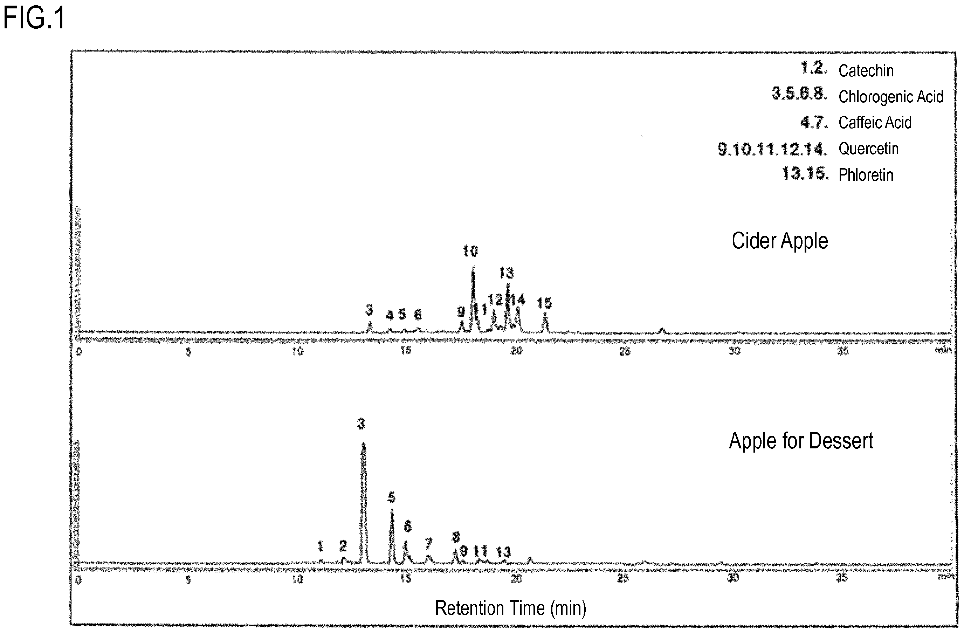

The resin-treated extract of cider apple obtained in Example 1 and the resin-treated extract of apple for eating raw (apple for dessert) obtained in Comparative Example 1 were subjected to the measurement using HPLC under the following conditions. The results are shown in FIG. 1.

(HPLC measurement conditions)

Apparatus: "1200LS System" manufactured by Agilent Technologies
Column: "InertSil ODS-3 150 mm x 4.6 mm" manufactured by GL Science
Mobile Phase A: 0.1 % Phosphoric acid aq
Mobile Phase B: ACN
Bconc.: 2% (0 min)→25% (14 min) →35% (25 min) →55% (35-38 min) →2% (40 min)
Flow rate: 0.7 (ml/min)
Column temp.: 40 (°C)
Det.: 340 (nm)

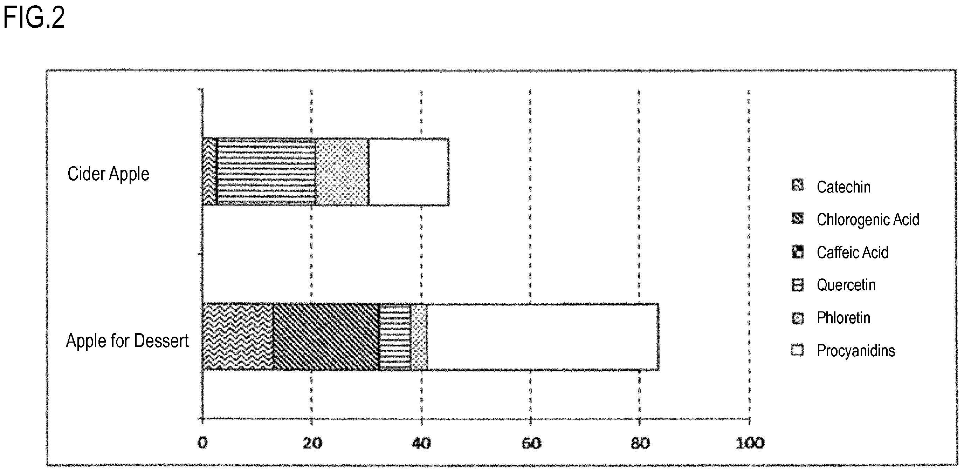

The composition of polyphenol contained in each resin-treated extract of apple, obtained from HPLC analytical results of FIG. 1 is shown in FIG. 2.

It was found from the results shown in FIG. 1 and FIG. 2 that the extract of cider apple contains polyphenols such as catechin, chlorogenic acid, caffeic acid, quercetin, and phloretin, and as compared with the extract of apple for eating raw (apple for dessert), in particular the content of quercetin, caffeic acid and phloretin is high and the content of procyanidins is low. Furthermore, it was found from the results shown in FIG. 2 that in the extract of cider apple, the phloretin content in the total polyphenol is 8 mass % or more.

(Measurement of amount of total polyphenol by Folin-Ciocalteu method)

100 $\mu$l of a sample solution was placed in a 20 ml test tube, and 7.5 ml of distilled water was added thereto. 0.9N phenol reagent (1.8N Folin-Ciocalteu's reagent was diluted 2 times and used) was further added.

The mixed solution was stirred with a test tube mixer. Subsequently, 1 ml of a 20% sodium carbonate aqueous solution was added and 1.1 ml of distilled water was added, followed by diluting to 10 ml total and then stirring with a test tube mixer. After allowing the mixture to stand for 1 hour, OD 765 nm was measured. Quantification was conducted using a calibration curve, and the amount of the total polyphenol (value in terms of chlorogenic acid) was calculated.

(Quantification of procyanidins)

A measurement sample completely dried to a solid matter by an evaporator was dissolved in methanol. 280 $\mu$l of the measurement sample was placed in a 2 ml Eppendorf tube, and 700 $\mu$l of a 1% (w/v) vanillin/methanol solution and 700 $\mu$l of a 1% (v/v) sulfuric acid/methanol solution were mixed therewith in this order. After allowing the mixture to stand at room temperature for 15 minutes, the absorbance at 500 nm was measured with a spectrophotometer. Using catechin, the measurement was conducted in the similar operation to prepare a calibration curve (catechin concentration vs Abs 500 nm), and the content of procyanidins was calculated and was used as the content of procyanidins in the total polyphenol.

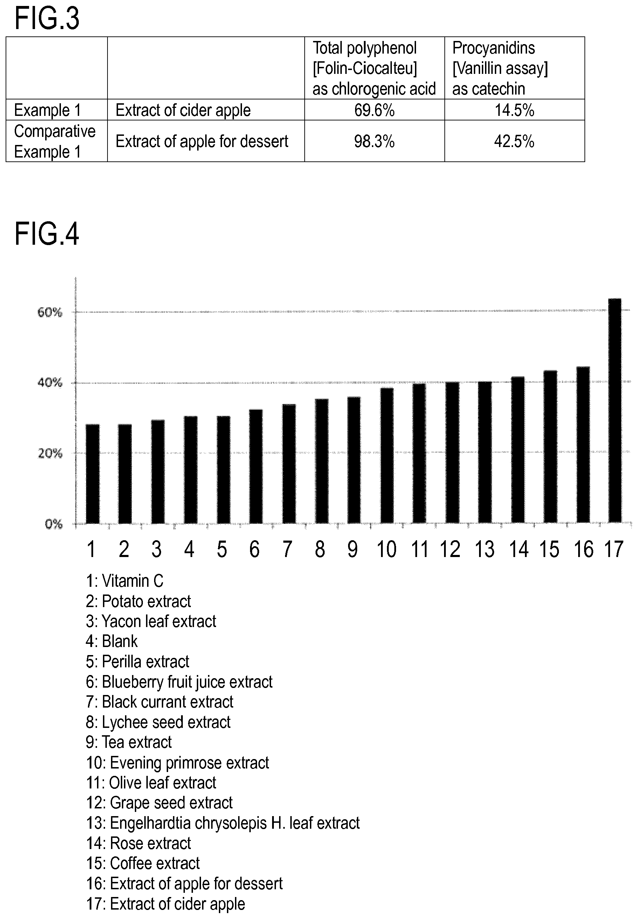

The measurement results of the amount of the total polyphenol by Folin-Ciocalteu method and the quantification results of procyanidins, in the resin-treated extract of cider apple obtained in Example 1 and the resin-treated extract of apple for eating raw (apple for dessert) obtained in Comparative Example 1 are shown in FIG. 3. It was found from the results shown in FIG. 3 that the content of procyanidins in the total polyphenol in the extract of cider apple is 25 mass % or less.

(Comparative Example 2)

Potato was dried and crushed. 100 g of water was added to 10 g of the crushed powder, followed by extraction under stirring at 50°C for 4 hours. The extract was cooled to 25°C and subjected to centrifugal separation under the condition of 4000 rpm and 30 minutes, and the supernatant was recovered. 3 g of celite was added to the supernatant, followed by filtration. Thus, 70 g of clear crude extract of potato was obtained.

10 ml of AMBERLITE FPX-66 (manufactured by Organo Corporation) was filled in a column, and 70 ml of distilled water, 50 ml of ethanol and 50 ml of distilled water were made to pass through in this order to conduct conditioning operation of the column. 20 ml of the crude extract was loaded to the column, cleaning with 20 ml of distilled water was performed and elution with 20 ml of 95% ethanol was then performed. Thus, a resin-treated material of potato was obtained.

The resin-treated material of potato obtained was concentrated under reduced pressure by an evaporator and dried to obtain 0.14 g of a potato powder preparation.

(Comparative Example 3)

The similar operation as in Comparative Example 2 was conducted using a dry yacon power to obtain 0.13 g of a yacon powder preparation.

(Comparative Example 4)

The similar operation as in Comparative Example 2 was conducted using a dry perilla (shiso) powder to obtain 0.15 g of a perilla powder preparation.

(Comparative Example 5)

The similar operation as in Comparative Example 2 was conducted using a dry blueberry powder to obtain 0.15 g of a blueberry powder preparation.

(Comparative Example 6)

The similar operation as in Comparative Example 2 was conducted using a dry black currant powder to obtain 0.14 g of a black currant powder preparation.

(Comparative Example 7)

The similar operation as in Comparative Example 2 was conducted using a dry lychee seed powder to obtain 0.13 g of a lychee seed powder preparation.

(Comparative Example 8)

The similar operation as in Comparative Example 2 was conducted using a dry tea powder to obtain 0.15 g of a tea powder preparation.

(Comparative Example 9)

The similar operation as in Comparative Example 2 was conducted using a dry evening primrose powder to obtain 0.11 g of an evening primrose powder preparation.

(Comparative Example 10)

The similar operation as in Comparative Example 2 was conducted using a dry olive leaf powder to obtain 0.11 g of an olive leaf powder preparation.

(Comparative Example 11)

The similar operation as in Comparative Example 2 was conducted using a dry grape seed powder to obtain 0.15 g of a grape seed powder preparation.

(Comparative Example 12)

The similar operation as in Comparative Example 2 was conducted using a dry Engelhardtia chrysolepis H. leaf powder to obtain 0.09 g of an Engelhardtia chrysolepis H. leaf powder preparation.

(Comparative Example 13)

The similar operation as in Comparative Example 2 was conducted using a dry rose powder to obtain 0.11 g of a rose powder preparation.

(Comparative Example 14)

The similar operation as in Comparative Example 2 was conducted using a dry coffee powder to obtain 0.21 g of a coffee powder preparation.

(Experimental Example 1)

6.41 g of citric acid, 3.59 g of trisodium citrate and 400 g of a sugar liquid having sugar content (Brix value)=75 were mixed with 4590 g of tap water to prepare 5000 g of a sugar-acid liquid having pH=3.5 and sugar content (Brix value)=6.

350 g of the sugar-acid liquid was filled in a transparent PET bottle, 10 ppm of citral was added and each flavor deterioration inhibitor prepared in Example 1 and Comparative Examples 1 to 14 was added such that the solid content thereof is 5 ppm, followed by subjecting to a light deterioration test.

A citral-containing sugar-acid liquid prepared without adding a flavor deterioration inhibitor in the above formulation was similarly irradiated with a fluorescent lamp (blank). A sugar-acid liquid containing citral and free of flavor deterioration inhibitor, which was not irradiated with a fluorescent lamp, was used as a control (not maltreated).

(Light deterioration test)

A test object in which a test specimen is filled in a transparent PET bottle was irradiated with light by using a light stability tester ("LH30-14M" manufactured by Nagano Science Co., Ltd.). The irradiation condition was that irradiation (illumination 10000 lux) with a white fluorescent lamp was conducted at a temperature of 25°C for 168 hours in a stationary state.

(Solid phase extraction method)

The citral-containing sugar-acid liquid having been subjected to the light deterioration test was concentrated by a solid phase extraction method. The sold phase used was conditioned with 500 ml/3 ml of "Inert Step C18-B" manufactured by GL Science by flowing 2.25 ml of a pentane:ether [=1:1 (volume ratio)] solution, 2.25 ml of methanol and 4.5 ml of distilled water before sample loading. 1000 ml of a solution having been subjected to the light deterioration test was made to pass therethrough, cleaning with 4.5 ml of distilled water was performed, drying for 30 minutes was performed, and then elution with 4.5 ml of a pentane: ether [=1:1 (volume ratio)] solution was performed.

A small amount of anhydrous sodium sulfate was added to the effluent to dehydrate, a solvent was distilled off under nitrogen atmosphere, 10 $\mu$l of 5-nonanone was added as an internal standard material, and the resultant was diluted to 1 ml in total accurately with ethanol by using a measuring flask. The sample thus prepared was measured with gas chromatography (GC) to analyze the residual amount of citral and the amount of a by-product.

(GC measurement conditions)

Apparatus: "6890N" manufactured by Agilent Technologies
Column: "BC-WAX 0.25 mm $\times$ 30m, I.D.=0.25 $\mu$m" manufactured by GL Science
Carrier gas: Helium
Temperature condition: 60 to 230°C (temperature rising: 4°C/min)
Detector: FID (250°C)

Residual ratio (%) of citral was calculated from the above measurement conditions according to the following

formula.

$$\text{Residual ratio (\%) of citral}=(A/B)\times 100$$

A: Citral content (ppm) in each sample after light irradiation
B: Citral content (ppm) in each sample that was not irradiated with light (control)

The results obtained by analyzing the residual ratio of citral in the light deterioration test conducted in Experiment Example 1 are shown in FIG. 4.
The meaning of designations in FIG. 4 is as follows.

Blank: Fluorescent lamp irradiation (no addition of flavor deterioration inhibitor)
Extract of cider apple: Powder preparation obtained in Example 1 (flavor deterioration inhibitor of the present invention)
Extract of apple for dessert: Powder preparation obtained in Comparative Example 1
Each plant extract: Powder preparation obtained in Comparative Examples 2 to 14

As shown in FIG. 4, the case that the extract of cider apple that is the flavor deterioration inhibitor of the present invention was added most remarkably suppressed the decrease of citral due to light irradiation, as compared with the case that each of plant extracts and extract of apple for eating raw (apple for dessert) was added.

(Experimental Example 2)

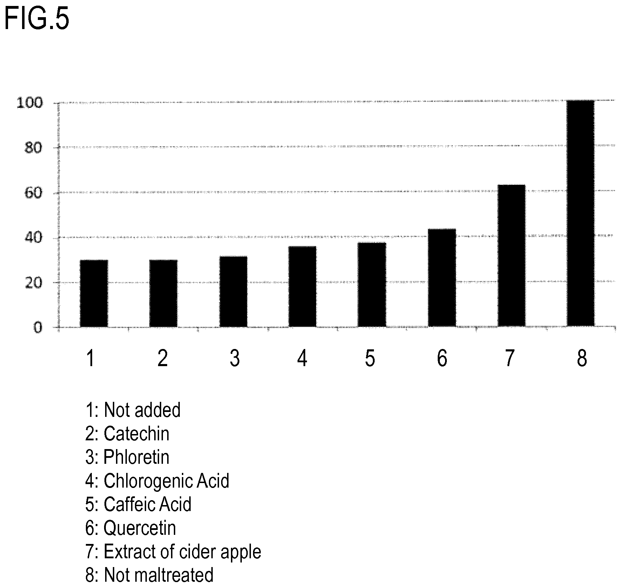

Light deterioration inhibition effect of citral as an index was investigated using simple polyphenols contained in an adsorbent-treated extract of cider apple. Similar to Experimental Example 1, each substance was added to the reaction system such that the solid concentration thereof is 5 ppm, followed by subjecting to a light deterioration test. Comparative graph of the residual ratio of citral is shown in FIG. 5.
As shown in FIG. 5, quercetin, caffeic acid and chlorogenic acid had the effect of inhibiting light deterioration of citral. However, the effect of inhibiting light deterioration of citral by the pure form thereof itself was poor as compared with the adsorbent-treated extract of cider apple.
Therefore, it is apparent that the effect of inhibiting light deterioration of citral by the adsorbent-treated extract of cider apple is not by each of conventionally known polyphenols contained in the extract, but those polyphenols and other trace components, contained in the extract, synergistically act with each other, thereby exhibiting the effect of inhibiting light deterioration of citral and retaining it.

(Evaluation Example 1) (Milk)

100 g of milk having added thereto each additive so as to be 0.05% was filled in a glass container, followed by placing in a light stability tester ("LH30-14M" manufactured Nagano Science Co., Ltd.). Irradiation with a fluorescent lamp (5000 lux, 5°C, 7 hours) was then performed. Thereafter, ten skilled panelists were selected, and functional evaluation was conducted. Milk (control) to which a flavor deterioration inhibitor and additives were not added and which was not irradiated with a fluorescent lamp was prepared, and the deterioration degree of flavor was relatively evaluated in the unit of 1 score such that the state free of the change in flavor as compared with the control is 7 and the state in which the flavor is remarkably deteriorated is 1.
The results are shown in Table 1. The score of evaluation in Table 1 is an average score given by the panelists who scored according to the following standards. The following Evaluation Examples 2 to 5 use the same evaluation method.

Functional evaluation standard

7: Having the same flavor as the control

1: Flavor is remarkably deteriorated

[Table 1]

| Additives | Extract of cider apple | Extract of apple for eating raw | αGRutinP | None (+Light) |
|---|---|---|---|---|
| Mouthfeel | 5.4 | 4.0 | 3.8 | 1.6 |
| In-mouth aroma | 5.2 | 4.2 | 3.2 | 1.0 |
| Feeling to throat | 4.8 | 4.4 | 3.6 | 1.8 |
| Sweetness | 6.2 | 5.6 | 5.4 | 4.4 |
| Fresh feeling | 4.8 | 3.4 | 3.2 | 1.0 |
| Rich feeling | 5.8 | 5.0 | 5.0 | 3.2 |
| Aftertaste | 5.8 | 4.4 | 4.0 | 2.4 |
| Fatty feeling | 6.2 | 5.2 | 4.8 | 3.0 |
| Comprehensive evaluation | 5.8 | 4.8 | 3.2 | 1.0 |

The meaning of designations in Table 1 is as follows (same in the subsequent Evaluation Examples).

Extract of cider apple: Powder preparation obtained in Example 1 (flavor deterioration inhibitor of the present invention)
Extract of apple for eating raw: Powder preparation obtained in Comparative Example 1
αGRutinP: α-Glucosylrutin (manufactured by Toyo Sugar Refining Co., Ltd.)

(Evaluation Example 2) (Soft cream mix)

100 g of soft cream mix having added thereto each additive shown in Table 2 so as to be 0.05% was filled in a transparent plastic container, and irradiated with a fluorescent lamp (5000 lux, 5°C, 24 hours). Thereafter, the same evaluation as in Evaluation Example 1 was performed. The results are shown in Table 2.

[Table 2]

| Additives | Extract of cider apple | Extract of apple for eating raw | αGRutinP | None (+Light) |
|---|---|---|---|---|
| Mouthfeel | 5.8 | 5.0 | 4.8 | 2.7 |
| In-mouth aroma | 5.2 | 4.0 | 3.7 | 1.2 |
| Sweetness | 6.6 | 6.2 | 6.2 | 5.5 |
| Fresh feeling | 6.4 | 4.4 | 4.2 | 1.5 |
| Rich feeling | 6.0 | 5.8 | 5.8 | 4.8 |
| Aftertaste | 5.8 | 4.4 | 4.2 | 2.2 |
| Fatty feeling | 6.4 | 6.0 | 5.8 | 4.7 |
| Comprehensive evaluation | 5.8 | 4.0 | 3.8 | 1.2 |

(Evaluation Example 3) (Milk pudding)

600 g of milk and 100 g of sugar were mixed and warmed, and 15 g of powdered gelatin dissolved in 10 g of water was added thereto to prepare homogenized milk pudding material. Each additive shown in Table 3 was added to the material so as to be 0.05%. 100 g of the milk pudding material having added thereto each additive was filled in a transparent plastic container, cooled and solidified in a refrigerator overnight, and then irradiated with a fluorescent lamp (5000 lux, 5°C, 7 hours). Thereafter, the same evaluation as in Evaluation Example 1 was performed. The results are shown in Table 3 below.

[Table 3]

| Additives | Extract of cider apple | Extract of apple for eating raw | αGRutinP | None (+Light) |
|---|---|---|---|---|
| Mouthfeel | 6.0 | 5.6 | 5.4 | 4.8 |
| In-mouth aroma | 5.6 | 4.8 | 4.6 | 2.4 |
| Sweetness | 6.0 | 5.6 | 5.6 | 4.0 |
| Fresh feeling | 5.8 | 4.6 | 4.4 | 2.4 |
| Rich feeling | 5.4 | 5.2 | 5.0 | 4.4 |
| Aftertaste | 6.0 | 5.2 | 5.0 | 3.2 |
| Fatty feeling | 6.4 | 5.4 | 5.0 | 4.8 |
| Comprehensive evaluation | 6.2 | 5.0 | 4.6 | 2.8 |

(Evaluation Example 4) (Whipped cream)

15 g of sugar was added to 200 g of cream, and each additive shown in Table 4 was added thereto so as to be 0.05%, followed by quickly whipping up while ice cooling. This was transferred to a squeezer, and an appropriate amount thereof was filled in a transparent plastic container, and irradiated with a fluorescent lamp (5000 lux, 5°C, 24 hours). Thereafter, the same evaluation as in Evaluation Example 1 was performed. The results are shown in Table 4 below.

[Table 4]

| Additives | Extract of cider apple | Extract of apple for eating raw | αGRutinP | None (+Light) |
|---|---|---|---|---|
| Mouthfeel | 6.8 | 6.6 | 6.5 | 6.0 |
| In-mouth aroma | 5.2 | 4.6 | 4.5 | 3.3 |
| Sweetness | 5.8 | 5.5 | 5.3 | 4.0 |
| Fresh feeling | 6.0 | 5.5 | 5.5 | 3.8 |
| Rich feeling | 6.0 | 5.8 | 5.8 | 5.5 |
| Aftertaste | 4.8 | 4.5 | 4.5 | 3.5 |
| Fatty feeling | 6.0 | 5.8 | 5.8 | 4.8 |
| Comprehensive evaluation | 5.6 | 5.0 | 4.8 | 3.0 |

(Evaluation Example 5) (Yogurt)

95 g of yogurt having added thereto each additive shown in Table 5 so as to be 0.05% was filled in a transparent plastic container, and irradiated with a fluorescent lamp (1000 lux, 5°C, 10 days). Thereafter, the same evaluation as in Evaluation Example 1 was performed. The results are shown in Table 5 below.

[Table 5]

| Additives | Extract of cider apple | Extract of apple for eating raw | αGRutinP | None (+Light) |
|---|---|---|---|---|
| Mouthfeel | 6.0 | 5.8 | 5.4 | 3.8 |
| In-mouth aroma | 5.6 | 5.2 | 4.6 | 2.0 |
| Sweetness | 6.0 | 5.0 | 4.8 | 3.6 |
| Fresh feeling | 6.0 | 5.2 | 4.4 | 2.0 |
| Rich feeling | 6.4 | 5.8 | 5.0 | 3.4 |
| Aftertaste | 5.8 | 5.2 | 5.0 | 3.2 |
| Fatty feeling | 5.4 | 5.2 | 5.0 | 3.0 |

(continued)

| Additives | Extract of cider apple | Extract of apple for eating raw | αGRutinP | None (+Light) |
|---|---|---|---|---|
| Comprehensive evaluation | 5.8 | 4.6 | 4.6 | 2.4 |

As shown in Tables 1 to 5, it was found that the flavor deterioration inhibitor (extract of cider apple) of the present invention has high effect of inhibiting light deterioration of flavor in the case of being added to various foods or drinks, as compared with the extract of apple for eating raw and αGRutinP.

(Evaluation Example 6) (Various drinks)

A drink in which each additive shown in Table 12 was added to each drink having the formulation shown in Tables 6 to 11 in an amount of 0.001 % was prepared, and subjected to a light deterioration test and a heat deterioration test. Those drinks were subjected to fluorescent lamp irradiation (5000 lux, 5°C, 7 days) in the light deterioration test or to heat deterioration (50°C, 10 days, light shielded state) in the heat deterioration test. Thereafter, ten skilled panelists were chosen and the functional evaluation was conducted.

Regarding the light deterioration test, a drink (control) to which a flavor deterioration inhibitor was not added and which was not irradiated with a fluorescent lamp was prepared, and regarding the heat deterioration test, a drink (control) to which a flavor deterioration inhibitor was not added and which was allowed to stand under refrigeration was prepared. The deterioration degree of flavor was relatively evaluated in the unit of 1 score such that the state free of the change in flavor as compared with the control is 7 and the state in which the flavor is remarkably deteriorated is 1. The results are shown in Table 12.

[Table 6]

| Sports drink | % |
|---|---|
| Granulated sugar | 3.10 |
| Fructose glucose liquid sugar | 1.57 |
| Citric acid | 0.10 |
| Vitamin C | 0.08 |
| Calcium lactate | 0.07 |
| Sodium citrate | 0.03 |
| Sodium chloride | 0.03 |
| Potassium chloride | 0.02 |
| Sodium L-glutamate | 0.003 |
| Niacin | 0.0013 |
| Sodium pantothenate | 0.0007 |
| Vitamin B6 | 0.00022 |
| Vitamin B12 | 0.0000006 |
| Grapefruit flavor | 0.10 |
| Water | Remainder |

[Table 7]

| Lemon juice-containing refreshing drink | % |
|---|---|
| Fructose glucose liquid sugar | 8.00 |
| 6.5-Time concentrated lemon juice | 0.80 |
| Citric acid | 0.13 |

(continued)

| Lemon juice-containing refreshing drink | % |
|---|---|
| Trisodium citrate | 0.07 |
| Lemon flavor | 0.10 |
| Water | Remainder |

[Table 8]

| Apple juice-containing refreshing drink | % |
|---|---|
| Fructose glucose liquid sugar | 8.00 |
| 5-Time concentrated lemon juice | 2.00 |
| Citric acid | 0.13 |
| Trisodium citrate | 0.07 |
| Apple flavor | 0.10 |
| Water | Remainder |

[Table 9]

| Fruit juice-free orange favored carbonated beverage | % |
|---|---|
| Fructose glucose liquid sugar | 13.00 |
| Citric acid | 0.10 |
| Orange flavor | 0.10 |
| Water | Remainder |

[Table 10]

| Tea with lemon | % |
|---|---|
| Fructose glucose liquid sugar | 6.00 |
| Black tea leaves | 1.00 |
| 5-Time concentrated lemon juice | 0.20 |
| Vitamin C | 0.01 |
| Lemon flavor | 0.10 |
| Water | Remainder |

[Table 11]

| Tea with milk | % |
|---|---|
| Milk | 20.00 |
| Granulated sugar | 3.00 |
| Black tea leaves | 1.00 |
| Milk flavor | 0.10 |
| Emulsifier | 0.03 |

(continued)

| Tea with milk | % |
| --- | --- |
| Water | Remainder |

[Table 12]

| Model drinks | Light deterioration test | | | Heat deterioration test | | |
| --- | --- | --- | --- | --- | --- | --- |
| | Additives | | | Additives | | |
| | Extract of cider apple | Extract of apple for eating raw | αGRutin P | Extract of cider apple | Extract of apple for eating raw | αGRutin P |
| Sports drink | 6.4 | 4.4 | 3.4 | 5.6 | 3.0 | 1.6 |
| Lemon juice-containing refreshing drink | 5.6 | 4.2 | 3.2 | 6.4 | 5.0 | 1.8 |
| Apple juice-containing refreshing drink | 6.2 | 5.8 | 2.8 | 5.6 | 4.2 | 2.0 |
| Fruit juice-free orange flavored carbonated beverage | 5.8 | 4.4 | 3.0 | 5.8 | 4.8 | 2.4 |
| Tea with lemon | 5.8 | 4.6 | 2.6 | 5.8 | 4.4 | 1.8 |
| Tea with milk | 6.0 | 4.6 | 2.8 | 6.2 | 4.4 | 1.6 |

As shown in Table 12, it was found that the flavor deterioration inhibitor (extract of cider apple) of the present invention has high effect of inhibiting light deterioration and heat deterioration of a flavor when added to various drinks, as compared with the extract of apple for eating raw and αGRutinP.

(Evaluation Example 7) (Gummi candy)

400 g of starch syrup and 400 g of granular sugar were heated and melted, and cooled. Thereafter, a gelatin solution of a mixture of 70 g of gelatin and 130 g of water was added, followed by mixing. 3 g of lemon flavor, 30 g of a 50% aqueous solution of citric acid, and 0.3 g of an ethanol solution containing 2% of each flavor deterioration inhibitor shown in Table 13 were added thereto, followed by stirring. The resultant was poured into a mold and dried overnight. The resulting each gummi candy was placed in a light stability tester ("LH30-14M" manufactured by Nagano Science Co., Ltd.), and irradiated with a fluorescent lamp (10000 lux, 25°C, 100 hours). Thereafter, ten skilled panelists were chosen, and functional evaluation was conducted.
Gummi candy (control) to which a flavor deterioration inhibitor was not added and which was not irradiated with a fluorescent lamp was prepared. The results of change of color tone and the degree of deterioration of flavor were relatively evaluated as the control being 5 and the results thereof are shown in Table 13. The score of evaluation in Table 13 is an average score given by each panelist who scored according to the following standards.
Color tone: Relatively evaluated in the unit of 1 score such that no change as compared with the control is 5 and the state of complete discoloration is 1.
Functional evaluation: Relatively evaluated in the unit of 1 score such that the state exhibiting no flavor change as compared with the control is 5 and the state that the flavor is completely deteriorated is 1.

[Table 13]

| | | Color tone | Functional evaluation | Comments |
| --- | --- | --- | --- | --- |
| Control | No light irradiation | 5 | 5 | None |

(continued)

| | | Color tone | Functional evaluation | Comments |
|---|---|---|---|---|
| Control | Light irradiation | 1 | 1 | Top flavor is lost. Flavor is wholly weak. |
| Extract of apple for eating raw | | 3 | 2 | Offensive smell is inhibited, but flavor lacks gorgeousness. |
| Extract of cider apple | | 4 | 4 | Free of offensive taste and smell, and deterioration is inhibited. |

As shown in Table 13, it was found that the flavor deterioration inhibitor (extract of cider apple) of the present invention has high effect of inhibiting light deterioration of flavor when added to confectionaries, as compared with the extract of apple for eating raw.

While the present invention has been described in detail and with reference to specific embodiments thereof, it will be apparent to one skilled in the art that various changes and modifications can be made therein without departing from the spirit and scope of the present invention.

The present application is based on a Japanese patent application filed on September 17, 2014 (Application No. 2014-188405), the whole thereof being incorporated herein by reference.

**Claims**

1.   A flavor deterioration inhibitor composed of an extract of a cider apple, or comprising an extract of a cider apple as an effective component.

2.   The flavor deterioration inhibitor according to Claim 1, wherein the extract of the cider apple is an adsorbent-treated product of an extraction liquid of the cider apple.

3.   The flavor deterioration inhibitor according to Claim 2, wherein the adsorbent is a synthetic resin adsorbent.

4.   The flavor deterioration inhibitor according to any one of Claims 1 to 3, wherein the cider apple is a fruit, a dry fruit, a fruit juice, a squeezed liquid, or a residue after squeezing a liquid.

5.   The flavor deterioration inhibitor according to any one of Claims 1 to 4, wherein the cider apple has, in a squeezed liquid thereof, a total polyphenol content of 0.2 mass % or more, and a malic acidity of 0.45 mass % or less.

6.   The flavor deterioration inhibitor according to any one of Claims 1 to 5, wherein the extract of the cider apple has a phloretin content in a total polyphenol of 8 mass % or more.

7.   The flavor deterioration inhibitor according to any one of Claims 1 to 6, wherein the extract of the cider apple has a procyanidins content in a total polyphenol of 25 mass % or less.

8.   A flavor comprising the flavor deterioration inhibitor according to any one of Claims 1 to 7.

9.   A food or drink comprising the flavor deterioration inhibitor according to any one of Claims 1 to 7.

10.   A method for inhibiting flavor deterioration of a material to be tested, comprising adding the flavor deterioration inhibitor according to any one of Claims 1 to 7 to the material to be tested, a flavor of which may be deteriorated.

11.   A method for producing a flavor deterioration inhibitor, comprising a step of subjecting an extraction liquid of a cider apple to an adsorption and desorption treatment with a synthetic resin adsorbent.

12.   A method for producing a flavor deterioration inhibitor, comprising the following steps (a) to (c):

(a) a step of bringing a cider apple into contact with water or a polar organic solvent to obtain an extraction liquid of the cider apple;

(b) a step of bringing the extraction liquid of the cider apple obtained in the step (a) into contact with an adsorbent, and then eluting a component adsorbed in the adsorbent with an organic solvent aqueous solution to obtain an adsorbent-treated product; and

(c) a step of concentrating the adsorbent-treated product obtained in the step (b).

## FIG.1

1.2. Catechin
3.5.6.8. Chlorogenic Acid
4.7. Caffeic Acid
9.10.11.12.14. Quercetin
13.15. Phloretin

Cider Apple

Apple for Dessert

Retention Time (min)

# FIG.2

## FIG.3

|  |  | Total polyphenol [Folin-Ciocalteu] as chlorogenic acid | Procyanidins [Vanillin assay] as catechin |
|---|---|---|---|
| Example 1 | Extract of cider apple | 69.6% | 14.5% |
| Comparative Example 1 | Extract of apple for dessert | 98.3% | 42.5% |

## FIG.4

1: Vitamin C
2: Potato extract
3: Yacon leaf extract
4: Blank
5: Perilla extract
6: Blueberry fruit juice extract
7: Black currant extract
8: Lychee seed extract
9: Tea extract
10: Evening primrose extract
11: Olive leaf extract
12: Grape seed extract
13: Engelhardtia chrysolepis H. leaf extract
14: Rose extract
15: Coffee extract
16: Extract of apple for dessert
17: Extract of cider apple

FIG.5

1: Not added
2: Catechin
3: Phloretin
4: Chlorogenic Acid
5: Caffeic Acid
6: Quercetin
7: Extract of cider apple
8: Not maltreated

# INTERNATIONAL SEARCH REPORT

| International application No. |
| --- |
| PCT/JP2015/076514 |

**A. CLASSIFICATION OF SUBJECT MATTER**
*A23L27/00*(2016.01)i, *A23C9/13*(2006.01)i, *A23C9/152*(2006.01)i, *A23G3/34* (2006.01)i, *A23G9/32*(2006.01)i, *A23G9/44*(2006.01)i, *A23G9/52*(2006.01)i, *A23L2/00*(2006.01)i, *C09K15/08*(2006.01)i, *C11B9/00*(2006.01)i
According to International Patent Classification (IPC) or to both national classification and IPC

**B. FIELDS SEARCHED**

Minimum documentation searched (classification system followed by classification symbols)
A23L1/22, A23C9/13, A23C9/152, A23G3/34, A23G9/32, A23G9/44, A23G9/52, A23L2/00, C09K15/08, C11B9/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)
JSTPlus/JMEDPlus/JST7580(JDreamIII), CAplus/BIOSIS/WPIDS(STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2006-197845 A  (The Nikka Whisky Distilling Co., Ltd.),<br>03 August 2006 (03.08.2006),<br>claims; paragraphs [0018] to [0031]<br>(Family: none) | 9<br>1–8,10–12 |
| X<br>A | JP 3-251165 A  (The Nikka Whisky Distilling Co., Ltd.),<br>08 November 1991 (08.11.1991),<br>page 4<br>(Family: none) | 9<br>1–8,10–12 |
| X | JP 8-23939 A  (San-Ei Gen F.F.I., Inc.),<br>30 January 1996 (30.01.1996),<br>claims; paragraphs [0017] to [0032]<br>(Family: none) | 1–12 |

[X] Further documents are listed in the continuation of Box C.          [ ] See patent family annex.

| | |
| --- | --- |
| * Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>24 November 2015 (24.11.15) | Date of mailing of the international search report<br>08 December 2015 (08.12.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

## INTERNATIONAL SEARCH REPORT

| International application No. |
|---|
| PCT/JP2015/076514 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 8-23940 A (San-Ei Gen F.F.I., Inc.), 30 January 1996 (30.01.1996), claims; paragraphs [0018] to [0040] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3027293 A
- JP 2001136931 A
- JP 2004166631 A
- JP 7285876 A
- JP 2014188405 A

**Non-patent literature cited in the description**

- Patent Office Publication. Collection of Well-Known Prior Arts, 141-147
- HASEGAWA LETTER. Hasegawa Co., Ltd, 1999, 22
- Shingo Nakamura. SSK Research Institute, 1994